# EUROPÄISCHE PATENTSCHRIFT

(11) **EP 0 924 370 B1**
(45) Veröffentlichungstag und Bekanntmachung des Hinweises auf die Patenterteilung: **29.09.2004**
(21) Anmeldenummer: 98121688.0
(22) Anmeldetag: 13.11.1998
(51) Int. Cl.: E05B 49/00, B60R 25/04

(54) **Einrichtung zum Verriegeln und Entriegeln einer Tür eines Kraftfahrzeugs**
Device for locking and unlocking a motor vehicle door
Dispositif pour verrouiller et déverouiller une porte d'un véhicule à moteur

(30) Priorität: 16.12.1997 DE 19755770
(43) Veröffentlichungstag der Anmeldung: 23.06.1999
(73) Patentinhaber: ROBERT BOSCH GMBH, 70442 Stuttgart (DE)
(72) Erfinder: Schmitz, Stephan, 70197 Stuttgart (DE); Wach, Achim, 71706 Markgroeningen (DE); Groesch, Lothar, 70374 Stuttgart (DE); Kaiser, Karl-Heinz, 71732 Tamm (DE)

(56) Entgegenhaltungen:
- EP-A- 0 689 974
- WO-A-96/28628
- DE-A- 3 308 803
- DE-A- 4 435 894
- FR-A- 2 713 571
- US-A- 5 583 383

## Beschreibung

Die Erfindung bezieht sich auf eine Einrichtung zum Verriegeln und Entriegeln einer Tür eines Kraftfahrzeugs mit einer an dem Kraftfahrzeug angeordneten Sendeeinheit, einem mit dieser in Verbindung stehenden Stuergerät und mindestens einer einem Benutzer zugeordneten Antworteinheit mit Zugangsberechtigungskennung und Fahrberechtigungskennung, wobei die zwischen der Sendeeinheit und der Antworteinheit ausgetauschte Information die Zugangsberechtigungskennung und die Fahrberechtigungskennun beinhaltet.

Eine derartige Einrichtung zum Verriegeln und Entriegeln einer Tür eines Kraftfahrzeuges mit einer Sendeeinheit, einem mit dieser in Verbindung stehenden Steuergerät sowie einer Antworteinheit in Form eines Transponders ist in der DE 44 35 894 A1 angegeben. Bei dieser bekannten Einrichtung ist vorgesehen, dass der Transponder zum Entriegeln einer Zentralverriegelung und zum Entriegeln einer elektronischen Wegfahrsperre unterschiedliche Identifikationscodes aussendet. Die Wegfahrsperre kann nur nach einer über die Steuereinheit durchgeführten Entriegelung der Zentralverriegelung entriegelt werden. Zum Steuern der Verriegelung und Entriegelung der Tür bzw. der in Betriebnahme des Fahrzeuges wertet die Steuereinrichtung Kennungen der Zugangsberechtigung und Fahrberechtigung aus.

Auch die WO 96/28628 A zeigt eine Einrichtung zum Verriegeln und Entriegeln einer Tür eines Kraftfahrzeuges mit einem Transponder zur Durchführung eines Frage-Antwort-Dialoges. Außer einer Zugangsberechtigungskontrolle ist auch eine Startberechtigungskontrolle vorgesehen, wobei die dem Benutzer zugeordnete Antworteinheit einen entsprechenden Zugangsberechtigungscode und Startberechtigungscode enthält und mittels einer Steuereinrichtung die Zugangsberechtigung bzw. Fahrberechtigung überprüft und gegebenenfalls freigegeben wird.

Bei einer in der DE 33 08 803 A1 angegebenen weiteren Einrichtung zum Verriegeln und Entriegeln einer Tür eines Kraftfahrzeuges sowie Freigeben einer Fahrberechtigung ist eine Magnetstreifenkarte vorgesehen, die in einen Schlitz an der Fahrzeugtür und einen Schlitz an einem Lesegerät im Fahrzeuginneren gesteckt werden kann.

In der FR 2 713 571 A ist eine Vorrichtung genannt, die nur einen zeitweiligen Fahrbetrieb zulässt, wenn z.B. der Fahrer das Fahrzeug verlassen hat.

Eine weitere Einrichtung zum schlüssellosen Verriegeln und Entriegeln einer Tür ist in "Keyless Entry System with Radio Card Transponder", Motoki Hirano et al, IEEE Transactions on Industrial Electronics, Vol. 35, 1988, Seiten 208 bis 216 angegeben. Bei dieser bekannten Einrichtung wird eine verriegelte Tür eines Kraftfahrzeuges entriegelt, sobald ein Benutzer, der eine Antworteinheit (Transponder) trägt, in das Abfragefeld einer im Bereich der Tür befindlichen Sendeeinheit eintritt und die Abfrage ausgelöst wird. Die Tür wird entriegelt, wenn die Sendeeinheit mittels entsprechender Auswerteeinrichtung den Code des Transponders als richtig erkannt hat. Zwar geht die Verriegelung und Entriegelung der Tür mit einer solchen Einrichtung ohne Umstände für den Benutzer vor sich, andererseits aber können besondere Situationen auftreten, in denen die Arbeitsweise dieser Einrichtung ungünstig ist, so daß die Akzeptanz bei den Benutzern leidet. So kann ein Fahrzeug in Betrieb genommen werden, wenn sich ein unberechtigter Benutzer Zugang zum Fahrzeuginnenraum verschafft hat.

Der Erfindung liegt die Aufgabe zugrunde, eine Einrichtung der eingangs genannten Art bereitzustellen, die eine erhöhte Sicherheit gegen unberechtigte Benutzung des Fahrzeugs bietet und den Benutzer in verschiedenen praktisch vorkommenden Situationen unterstützt.

Diese Aufgabe wird mit den Merkmalen des Anspruchs 1 gelöst. Hiernach ist vorgesehen, dass zumindest zum Speichern der Fahrberechtigung außer der Antworteinheit eine zusätzliche, an das Steuergerät angeschlossene Speichereinrichtung im oder am Fahrzeug vorgesehen ist und dass nach Betreten des Fahrzeugs ohne Zugangsberechtigung keine Abfrage der Fahrberechtigungskennung auslösbar ist.

Mit der Zugangsberechtigungskennung ist es möglich, einen Zugang zum Fahrzeuginnenraum zu erhalten, wobei ein Wegfahren jedoch unterbunden wird. Ein Wegfahren ist dann erst möglich, wenn auch eine Fahrberechtigung festgestellt worden ist. Mit der Speicherung der Berechtigungsdaten in der zusätzlichen Speichereinrichtung ist eine ständige Überprüfung des Berechtigungszustandes und auch des Vorhandenseins der Antworteinheit ermöglicht, so dass mittels des Steuergeräts auf geänderte Situationen reagiert werden kann. Durch entsprechende Programmierung des Steuergeräts können dabei vielfältige Situationen erkannt und berücksichtigt und eine jeweilige geeignete Reaktion ausgelöst werden. Bei unberechtigtem Betreten des Fahrzeuges wird ein Wegfahren verhindert.

In den Unteransprüchen sind vorteilhafte Ausgestaltungen der Erfindung bezüglich unterschiedlicher Situationen angegeben.

Ist vorgesehen, daß die Abfrage der Fahrberechtigungskennung mittels eines Steuergeräts erst ausgelöst und ausgewertet wird, wenn die Zugangsberechtigung aufgrund der Zugangsberechtigungskennung erkannt ist, und dass die Fahrberechtigung in der zusätzlichen Speichereinrichtung gespeichert wird, wenn diese durch die Auswertung in einer Auswertestufe des Steuergeräts erkannt ist, so wird eine Fahrberechtigung erst gar nicht erteilt, wenn keine Zugangsberechtigung vorliegt.

Vorteilhafte Aufbauvarianten bestehen darin, dass die zusätzliche Speichereinrichtung eine Notkarte oder ein Speicherbereich ist und in einem Dachmodul oder dem Steuergerät aufgenommen oder aufnehmbar ist. Die Speichereinrichtung in Form der Notkarte kann gewünschtenfalls entnommen werden, so dass Manipulationen an der zusätzlichen Speichereinrichtung nicht möglich sind. Für einen einfachen Aufbau kann die zusätzliche Speichereinrichtung auch als Speicherbereich in einem Dachmodul oder dem Steuergerät vorgesehen sein.

Ein Zeitfenster für die Überprüfung der Fahrberechtigung und damit eine zusätzliche Sicherheit wird dadurch erhalten, dass die Abfrage der Fahrberechtigungskennung vor oder kurz nach dem Starten des Fahrzeugs mittels des Steuergeräts ausgelöst wird.

Die sichere Funktion einerseits und die Erhöhung der Sicherheit gegen unbebechtigte Benutzung andererseits werden dadurch unterstützt, dass die Fahrberechtigung in der zusätzlichen Speichereinrichtung aufrecht erhalten wird, wenn die Antworteinheit während der Fahrt außer Reichweite eines Empfangsbereichs der Fahrberechtigungskennung gerät, und dass bei stehendem Fahrzeug und Motor die Fahrberechtigung in der zusätzlichen Speichereinrichtung erlischt.

Um z.B. den Fahrer darauf hinzuweisen, dass sich die Antworteinheit nicht mehr im Abfragebereich oder Empfangsbereich befindet, ist vorgesehen, dass eine an das Steuergerät angeschlossene akustische und/oder optische Anzeigevorrichtung vorhanden ist, mit der anzeigbar ist, wenn die Antworteinheit den Empfangsbereich der Fahrberechtigungskennung verlässt.

Eine weitere wichtige Information für den Benutzer wird dadurch geliefert, dass anzeigbar ist, wenn der Fahrer bei stehendem Fahrzeug dieses verlässt und dabei mindestens eine Antworteinheit im Fahrzeug zurückgelassen ist, wobei die Türen nicht verriegelt werden. Auf diese Weise ist sichergestellt, dass die Antworteinheit von Berechtigten an sich genommen und nicht einem Unberechtigten zugänglich wird.

Eine Variante der Ausprägung des Bedienkonzeptes kann dadurch gegeben sein, dass eine innenliegende Karte automatisch gesperrt wird, wenn in allen Fällen ein Verriegeln der Türen zwingend gewünscht wird. Ein Verriegeln erfolgt durch eine Willenserklärung ("Tasten an der Tür").

Die Sicherheit kann weiterhin durch die Maßnahme erhöht werden, dass die Tür nur verriegelbar ist, wenn die Notkarte aus der Aufnahme entnommen ist.

Der Fall, dass eine Antworteinheit unbeabsichtigt im Kofferraum eingeschlossen wird, wird dadurch vermieden, dass nach Entriegeln der Kofferraumtür und Zurücklassen einer Antworteinheit im Kofferraum die Kofferraumtür nicht verriegelbar ist. Dies kann dem Fahrer auch durch akustische/optische Vorrichtung angezeigt werden.

Um das Fahrzeug in einer gefährlichen Situation jedenfalls aus einem Gefahrenbereich fahren zu können, ist vorgesehen, dass in einer Notfallsituation mittels des Steuergeräts vorgebbar ist, dass das Fahrzeug für eine begrenzte Wegstrecke bei fehlender Fahrberechtigung fahrbar ist, wobei eine Warneinrichtung einschaltbar ist. Dabei wird die Möglichkeit, das Fahrzeug unberechtigterweise weit zu entfernen, dadurch unterbunden, dass die Wegstrecke nach Ausgehen des Motors und Wiederstarten verkürzt ist. Bei einem sich wiederholenden Starten wird die dann zurückzulegende Wegstrecke im Vergleich zur letztmalig zurückgelegten Wegstrecke deutlich verkürzt. Solche Sondersituationen werden nach außen durch eine akustische/optische Vorrichtung angezeigt.

Eine einfache Bedienung in Verbindung mit dem Transponder wird dadurch erreicht, dass das Starten des Fahrzeugs und Lösen des Lenkradschlosses durch gleichzeitiges Drücken des Bremspedals und Ziehen eines Knaufs am Gangwahlhebel durchführbar ist und dass der Motor durch Drücken eines Knopfes oder Drehschalters abstellbar ist.

Zu einem reibungslosen Betrieb des Fahrzeugs tragen weiterhin die Maßnahmen bei, dass nach einem Fahrerwechsel die gespeicherte Fahrberechtigung erlischt und auf eine Abfrage der Antworteinheit des Beifahrers umgeschaltet wird, falls der neue Fahrer keine Antworteinheit besitzt.

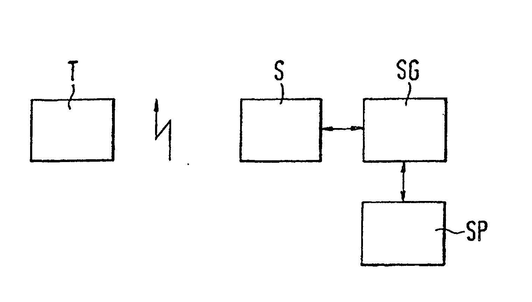

Die Erfindung wird nachfolgend anhand eines Ausführungsbeispiels unter Bezugnahme auf die Zeichnung näher erläutert. Die Figur zeigt in einem schematischen Blockschaltbild die wesentlichen Bestandteile der Einrichtung zum Verriegeln und Entriegeln einer Tür eines Kraftfahrzeugs.

Eine einem Benutzer zugeordnete Antworteinheit T in Form eines Transponders trägt eine Information, die von einer an dem Kraftfahrzeug angeordneten Sendeeinheit abfragbar ist, sobald die Antworteinheit T in den Bereich der Reichweite einer an dem Kraftfahrzeug angeordneten Sendeeinheit S eintritt. Die Sendeeinheit S steht in Verbindung mit einem Steuergerät SG, an das andererseits auch eine Zusatzeinheit SP in Form einer neben dem Transponder T zusätzlichen Speichereinrichtung SP angeschlossen ist. Das Steuergerät SG weist verschiedene Stufen auf, mit denen die von der Sendeeinheit S und der Speichereinrichtung SP gelieferten Daten auswertbar und geeignete Reaktionen auslösbar sind, die z.B. mittels einer programmierbaren Einheit des Steuergeräts jeweiligen Situationen zugeordnet sind.

Die zusätzliche Speichereinrichtung kann in einer Notkarte oder einem Speicherbereich bestehen und in einem Dachmodul oder in dem Steuergerät SG beispielsweise im Bereich eines Kombiinstruments bzw. des Armaturenbretts aufgenommen sein. Die Abfrage der Antworteinheit T wird vorteilhaft mittels einer Auslöseeinheit initiiert, die im Türgriff des Kraftfahrzeugs untergebracht ist und auf ein Betätigen des Türgriffs reagiert.

Die in der Antworteinheit T gespeicherte Information enthält außer einer Zugangsberechtigungskennung auch eine Fahrberechtigungskennung, wobei mittels einer entsprechenden Programmierung des Steuergeräts SG beim Auslösen der Abfrage zunächst nur die Zugangsberechtigungskennung überprüft und nach Feststellen der Zugangsberechtigung in dem Steuergerät SG die Tür entriegelt wird. Die Fahrberechtigungskennung wird vor oder kurz nach dem Starten des Fahrzeugs geprüft und nach Feststellen der Fahrberechtigung in der zusätzlichen Speichereinrichtung zwischengespeichert.

Verläßt die Antworteinheit T während der Fahrt, die mittels einer Drehzahlerfassung oder Motorbetriebszustandserfassung festgestellt wird, z.B. wenn Kinder mit dem Transpondert T spielen oder dieser aus einer Tasche fällt, den Empfangsbereich für die Abfrage der Fahrberechtigungskennung, so bleibt die Fahrberechtigung erhalten. Bei stehendem Fahrzeug, d.h. wenn der Motor abgeschaltet ist, erlischt die Fahrberechtigung, wobei sie in der zusätzlichen Speichereinrichtung SP automatisch gelöscht wird, falls der Fahrer das Fahrzeug mit dem Transponder T verläßt.

Verläßt der Transponder T während der Fahrt den Empfangs- bzw. Nahbereich der Abfrage der Fahrberechtigungskennung, ist dies z.B. am Dachmodul optisch oder akustisch mittels einer entsprechenden Anzeigevorrichtung anzeigbar. Verläßt der Fahrer bei stehendem Fahrzeug dieses, so wird er durch einen doppelten Warnton beim Zuschlagen der Fahrertür auf das Fehlen des Transponders T hingewiesen. Die Türen werden dann nicht verriegelt. In dem Steuergerät SG kann vorgesehen sein, daß sich die Türen nur dann verriegeln lassen, wenn der Fahrer die Notkarte aus ihrer Aufnahme herausgenommen hat.

Verläßt der Fahrer das Fahrzeug und befindet sich noch mindestens ein Transponder T im Fahrzeug, so wird dies mittels eines akustischen oder optischen Signals beim Zuwerfen der Tür angezeigt. Die Tür wird nicht automatisch verriegelt, wenn sich noch mindestens ein Transponder im Fahrzeug befindet. Befindet sich hingegen kein Transponder T im Fahrzeug, werden die Türen verriegelt.

Wird der Kofferraum durch Betreten eines entsprechenden Nahbereichs "Kofferraum" mit dem Transponder T entriegelt und vom Zugangsberechtigten geöffnet und verbleibt der Transponder T im Kofferraum, so wird die Kofferraumtür beim Schließen nicht verriegelt.

Wird das Fahrzeug ohne Zugangsberechtigung bei verriegelter Tür auf unerlaubte Art betreten, so wird die Überprüfung der Fahrberechtigungskennung nicht freigeschaltet. Eine vorhandene Karte wird gesperrt.

Um ein Fahrzeug in einer Notfallsituation aus einer Gefahrenzone bringen zu können, läßt sich dieses ohne Fahrberechtigung starten und eine begrenzte einstellbare Weglänge (z.B. 50 Meter) fahren. Ein derartiger besonderer Zustand (z.B. Stehenbleiben auf einem Bahnübergang, Unfall) wird durch ein akustisches Hupsignal und/oder eine eingeschaltete Warnblinkanlage oder blinkendes Abblendlicht auch der Umgebung angezeigt. Wird das Fahrzeug in einer derartigen Situation abgewürgt, so läßt es sich nach einer programmierbaren Zeitspanne von z.B. fünf Sekunden wieder starten. Nach weiterem Abwürgen des Motors kann die Zeitspanne verlängert und/oder die Wegstrecke halbiert werden.

Das Starten des Fahrzeugs und Lösen des Lenkradschlosses kann durch gleichzeitiges Drücken des Bremspedals und Ziehen eines Knaufs am Gangwahlhebel erfolgen. Der Motor kann durch Drücken eines Knopfes, der z.B. am Lenkrad angeordnet ist, abgestellt werden.

Findet ein Fahrerwechsel mit dem Beifahrer statt und wird dabei der Motor ausgeschaltet, so erlischt die Fahrberechtigung. Hat der Beifahrer keinen Transponder T mit Fahrberechtigungskennung, so wird nach dem Platzwechsel der vorhergehende Transponder T im Bereich des Beifahrers gesucht und dem neuen Fahrer die Fahrberechtigung erteilt, wenn die Fahrberechtigungskennung positiv festgestellt wird.

Mit der beschriebenen Ausbildung der Einrichtung kann sich diese flexibel an die praktisch vorkommenden Situationen anpassen.

## Patentansprüche

1. Einrichtung zum Verriegeln und Entriegeln einer Tür eines Kraftfahrzeugs mit einer an dem Kraftfahrzeug angeordneten Sendeeinheit (S), einem mit dieser in Verbindung stehenden Steuergerät (SG) und mindestens einer einem Benutzer zugeordneten Antworteinheit (T) mit Zugangsberechtigungskennung und Fahrberechtigungskennung, wobei die zwischen der Sendeeinheit (S) und der Antworteinheit (T) ausgetauschte Information die Zugangsberechtigungskennung und die Fahrberechtigungskennung beinhaltet,
**dadurch gekennzeichnet,**
**dass** zumindest zum Speichern der Fahrberechtigung außer der Antworteinheit (T) eine zusätzliche, an das Steuergerät angeschlossene Speichereinrichtung (SP) im oder am Fahrzeug vorgesehen ist und
**dass** nach Betreten des Fahrzeugs ohne Zugangsberechtigung keine Abfrage der Fahrberechtigungskennung auslösbar ist.

2. Einrichtung nach Anspruch 1,
**dadurch gekennzeichnet,**
**dass** die Abfrage der Fahrberechtigungskennung mittels eines Steuergeräts (SG) erst ausgelöst und ausgewertet wird, wenn die Zugangsberechtigung aufgrund der Zugangsberechtigungskennung erkannt ist, und
**dass** die Fahrberechtigung in der zusätzlichen Speichereinrichtung erst dann gespeichert wird, wenn diese durch die Auswertung in einer Auswertestufe des Steuergeräts (SG) erkannt ist.

3. Einrichtung nach Anspruch 1 oder 2,
**dadurch gekennzeichnet,**
**dass** die zusätzliche Speichereinrichtung (SP) eine Notkarte oder ein Speicherbereich ist und in einem Dachmodul oder dem Steuergerät (SG) aufgenommen oder aufnehmbar ist.

4. Einrichtung nach einem der vorhergehenden Ansprüche,
**dadurch gekennzeichnet,**
**dass** die Abfrage der Fahrberechtigungskennung vor oder kurz nach dem Starten des Fahrzeugs mittels des Steuergeräts (SG) ausgelöst wird.

5. Einrichtung nach einem der vorhergehenden Ansprüche,
**dadurch gekennzeichnet,**
**dass** die Fahrberechtigung in der zusätzlichen Speichereinrichtung (SP) aufrecht erhalten wird, wenn die Antworteinheit (T) während der Fahrt außer Reichweite eines Empfangsbereichs der Fahrberechtigungskennung gerät, und
**dass** bei stehendem Fahrzeug und Motor die Fahrberechtigung in der zusätzlichen Speichereinrichtung (SP) erlischt.

6. Einrichtung nach einem der vorhergehenden Ansprüche,
**dadurch gekennzeichnet,**
**dass** eine an das Steuergerät (SG) angeschlossene akustische und/oder optische Anzeigevorrichtung vorgesehen ist, mit der anzeigbar ist, wenn die Antworteinheit (T) den Empfangsbereich der Fahrberechtigungskennung verlässt.

7. Einrichtung nach einem der vorhergehenden Ansprüche,
**dadurch gekennzeichnet,**
**dass** anzeigbar ist, wenn der Fahrer bei stehendem Fahrzeug dieses verlässt und dabei mindestens eine Antworteinheit (T) im Fahrzeug zurückgelassen ist, wobei die Türen nicht verriegelt werden.

8. Einrichtung nach einem der Ansprüche 3 bis 7,
**dadurch gekennzeichnet,**
**dass** die Tür nur verriegelbar ist, wenn die Notkarte (SP) aus der Aufnahme entnommen ist.

9. Einrichtung nach einem der vorhergehenden Ansprüche,
**dadurch gekennzeichnet,**
**dass** nach Entriegeln der Kofferraumtür und Zurücklassen einer Antworteinheit (T) im Kofferraum die Kofferraumtür nicht verriegelbar ist und dies akustisch/optisch anzeigbar ist.

10. Einrichtung nach einem der vorhergehenden Ansprüche,
**dadurch gekennzeichnet,**
**dass** in einer Notfallsituation mittels des Steuergeräts (SG) festgelegt ist,
**dass** das Fahrzeug für eine begrenzte Wegstrecke bei fehlender Fahrberechtigung fahrbar ist, wobei eine Warneinrichtung einschaltbar ist.

11. Einrichtung nach Anspruch 10,
**dadurch gekennzeichnet,**
**dass** die Wegstrecke nach Ausgehen des Motors und Wiederstarten verkürzt ist.

12. Einrichtung nach einem der vorhergehenden Ansprüche,
**dadurch gekennzeichnet,**
**dass** das Starten des Fahrzeugs und Lösen des Lenkradschlosses durch gleichzeitiges Drücken des Bremspedals und Ziehen eines Knaufs am Gangwahlhebel oder Betätigen eines Drehschalters durchführbar ist und
**dass** der Motor durch Drücken eines Knopfes oder Betätigen eines Drehschalters abstellbar ist.

13. Einrichtung nach einem der vorhergehenden Ansprüche,
**dadurch gekennzeichnet,**
**dass** nach einem Fahrerwechsel die gespeicherte Fahrberechtigung erlischt und auf eine Abfrage der Antworteinheit (T) des Beifahrers umgeschaltet wird, falls der neue Fahrer keine Antworteinheit (T) besitzt.

## Claims

1. Device for locking and unlocking a door of a motor vehicle having a transmitter unit (S) which is arranged on the motor vehicle, a control device (SG) which is connected to the latter and at least one response unit (T) which is assigned to a user and has an access authorization code and driving authorization code, the information which is exchanged between the transmitter unit (S) and the response unit (T) including the access authorization code and the driving authorization code, **characterized in that**, apart from the response unit (T), an additional storage device (SP) which is connected to the control device is provided in or on the vehicle at least for storing the driving authorization, and **in that** an interrogation of the driving authorization code cannot be triggered after a person gets into the vehicle without access authorization.

2. Device according to Claim 1, **characterized in that** the interrogation of the driving authorization code by means of a control device (SG) is not triggered and evaluated until the access authorization is detected on the basis of the access authorization code, and **in that** the driving authorization is not stored in the additional storage device until said device is detected by the evaluation in an evaluation stage of the control device (SG).

3. Device according to Claim 1 or 2, **characterized in that** the additional storage device (SP) is an emergency card or a storage region and is accommodated, or can be accommodated, in a roof module or in the storage device (SG).

4. Device according to one of the preceding claims, **characterized in that** the interrogation of the driving authorization code by means of the control device (SG) is triggered before or just after the vehicle is started.

5. Device according to one of the preceding claims, **characterized in that** the driving authorization is retained in the additional storage device (SP) if the response unit (T) exceeds the range of a reception area of the driving authorization code while travelling, and **in that**, when the vehicle and engine are stationary, the driving authorization in the additional storage device (SP) is deleted.

6. Device according to one of the preceding claims, **characterized in that** an acoustic and/or visual display device which is connected to the control device (SG) is provided, with which display device it is possible to indicate when the response unit (T) leaves the reception area of the driving authorization code.

7. Device according to one of the preceding claims, **characterized in that** it is possible to display when the driver leaves the vehicle when the vehicle is stationary, and in doing so leaves behind at least one response unit (T) in the vehicle, the doors not being locked.

8. Device according to one of Claims 3 to 7, **characterized in that** the door can be locked only if the emergency card (SP) is removed from the receptacle.

9. Device according to one of the preceding claims, **characterized in that** the door of the boot cannot be locked after the door of the boot has been unlocked and a response unit (T) has been left behind in the boot, and this can be indicated acoustically/visually.

10. Device according to one of the preceding claims, **characterized in that** in an emergency the control device (SG) determines that the vehicle can be driven without driving authorization for a limited distance, in which case a warning device can be switched on.

11. Device according to Claim 10, **characterized in that** the distance is shortened after the engine shuts down and restarts.

12. Device according to one of the preceding claims, **characterized in that** the starting of the vehicle and release of the steering wheel lock can be brought about by simultaneously pressing the brake pedal and pulling a knob on the gear shift lever or activating a rotary switch, and **in that** the engine can be shut off by pressing a knob or activating a rotary switch.

13. Device according to one of the preceding claims, **characterized in that** the stored driving authorization is cancelled after a change of driver, and the device is switched over to an interrogation of the response unit (T) of the front seat passenger if the new driver does not possess a response unit (T).

## Revendications

1. Dispositif de verrouillage et de déverrouillage d'une porte d'un véhicule automobile, comprenant une unité d'émission (S) disposée sur le véhicule automobile, un appareil de commande (SG) en communication avec celle-ci, et au moins une unité de réponse (T) affectée à un utilisateur avec code d'autorisation d'accès et code d'autorisation de conduite, l'information échangée entre l'unité d'émission (S) et l'unité de réponse (T) contenant le code d'autorisation d'accès et le code d'autorisation de conduite,
**caractérisé en ce qu'**
au moins pour mémoriser l'autorisation de conduite, outre l'unité de réponse (T), un dispositif de mémoire (SP) supplémentaire connecté à l'appareil de commande est prévu dans ou sur le véhicule, et après avoir accédé au véhicule sans autorisation d'accès aucune consultation du code d'autorisation de conduite ne peut être déclenchée.

2. Dispositif selon la revendication 1,
**caractérisé en ce que**
la consultation du code d'autorisation de conduite au moyen d'un appareil de commande (SG) n'est déclenchée et évaluée que si l'autorisation d'accès a été reconnue grâce au code d'autorisation d'accès, et l'autorisation de conduite n'est mémorisée dans le dispositif de mémoire supplémentaire qui si elle a été reconnue par l'évaluation dans une étape d'évaluation de l'appareil de commande (SG).

3. Dispositif selon la revendication 1 ou 2,
**caractérisé en ce que**
le dispositif de mémoire (SP) supplémentaire est une carte de secours ou une zone de mémoire, il est logé ou peut être logé dans un module de toit ou dans l'appareil de commande (SG).

4. Dispositif selon l'une quelconque des revendications précédentes,
**caractérisé en ce que**
la consultation du code d'autorisation de conduite est déclenchée au moyen de l'appareil de commande (SG) avant ou juste après le démarrage du véhicule.

5. Dispositif selon l'une quelconque des revendications précédentes,
**caractérisé en ce que**
l'autorisation de conduite est maintenue dans le dispositif de mémoire (SP) supplémentaire si, pendant le déplacement, l'unité de réponse (T) arrive hors de la portée d'une zone de réception du code d'autorisation de conduite, et l'autorisation de conduite s'efface dans le dispositif de mémoire (SP) supplémentaire lorsque le véhicule et le moteur sont arrêtés.

6. Dispositif selon l'une quelconque des revendications précédentes,
**caractérisé en ce qu'**
un dispositif indicateur acoustique et/ou optique connecté à l'appareil de commande (SG) est prévu, permettant de signaler la sortie de l'unité de réponse (T) de la zone de réception du code d'autorisation de conduite.

7. Dispositif selon l'une quelconque des revendications précédentes,
**caractérisé en ce qu'**
il est possible d'indiquer si le conducteur quitte le véhicule, celui-ci étant à l'arrêt, et laisse alors au moins une unité de réponse (T) dans le véhicule, les portes n'étant pas verrouillées.

8. Dispositif selon l'une quelconque des revendications 3 à 7,
**caractérisé en ce que**
la porte ne peut être verrouillée que si la carte de secours (SP) a été retirée du logement.

9. Dispositif selon l'une quelconque des revendications précédentes,
**caractérisé en ce qu'**
après le déverrouillage de la porte du coffre et en présence d'une unité de réponse (T) dans le coffre, la porte du coffre ne peut pas être verrouillée, ceci pouvant être signalé par des moyens acoustiques/ optiques.

10. Dispositif selon l'une quelconque des revendications précédentes,
**caractérisé en ce que**
dans une situation d'urgence, il est fixé, au moyen de l'appareil de commande (SG), que le véhicule peut être déplacé sur un trajet limité en l'absence d'une autorisation de conduite, un dispositif d'avertissement pouvant être mis en marche.

11. Dispositif selon la revendication 10,
**caractérisé en ce que**
le trajet est raccourci après l'extinction du moteur et un nouveau démarrage.

12. Dispositif selon l'une quelconque des revendications précédentes,
**caractérisé en ce que**
le démarrage du véhicule et le déverrouillage de la serrure de volant peuvent être obtenus par un appui sur la pédale de frein et le tirage d'un bouton sur le levier de vitesses ou l'actionnement d'un interrupteur à manette simultanés, et le moteur peut être coupé en appuyant sur un bouton ou en actionnant un interrupteur à manette.

13. Dispositif selon l'une quelconque des revendications précédentes,
**caractérisé en ce qu'**
après un changement de conducteur l'autorisation de conduite mémorisée est effacée et une commutation sur une consultation de l'unité de réponse (T) du copilote est effectuée si le nouveau conducteur ne possède pas d'unité de réponse (T).
